(19) Europäisches Patentamt
European Patent Office
Office européen des brevets

(11) Veröffentlichungsnummer: **0 170 611**
**B1**

(12) **EUROPÄISCHE PATENTSCHRIFT**

(45) Veröffentlichungstag der Patentschrift: **12.10.88**

(51) Int. Cl.⁴: **D 06 M 16/00**

(21) Anmeldenummer: **85810141.3**

(22) Anmeldetag: **29.03.85**

(54) **Verfahren zum Schützen von Keratinmaterial vor dem Befall durch keratinfressende Insekten.**

(30) Priorität: **06.04.84 CH 1749/84**

(43) Veröffentlichungstag der Anmeldung: **05.02.86 Patentblatt 86/6**

(45) Bekanntmachung des Hinweises auf die Patenterteilung: **12.10.88 Patentblatt 88/41**

(84) Benannte Vertragsstaaten: **BE CH DE FR GB LI**

(56) Entgegenhaltungen:
**JOURNAL OF THE TEXTILE INSTITUTE, Nr. 2, 1981, Seiten 92-96; T. SHAW u.a.: "The effectiveness of a permethrin-containing mothproofing agent against the brown house moth (Hofmannophila pseudospretella (Stainton))"**
**JOURNAL OF THE TEXTILE INSTITUTE, Nr. 2, 1979, Seiten 53-61; R.J. MAYFIELD u.a.: "A comparison of new synthetic pyrethroids for the industrial insectproofing of wool"**

(73) Patentinhaber: **CIBA- GEIGY AG, Klybeckstrasse 141, CH- 4002 Basel (CH)**

(72) Erfinder: **Ackermann, Peter, Dr., Hangelimattweg 113, CH- 4148 Pfeffingen (CH)**
Erfinder: **Reinehr, Dieter, Dr., Wolfsheule 10, D-7842 Kandern (DE)**
Erfinder: **Schmid, Werner, Keltenweg 40, CH- 4125 Riehen (CH)**

**EP 0 170 611 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die vorliegende Erfindung betrifft ein Verfahren zum Schützen bzw. Ausrüsten von Keratinmaterial bzw. keratinhaltigem Material vor bzw. gegen Befall durch keratinfressende Insekten durch Behandlung dieser Materialien mit bestimmten (±)-cis-2,2-Dimethyl-3-(2,2-dichlorvinyl)-cyclopropancarbonsäure-3-phenoxybenzylestern.

Synthetische Pyrethroide sind seit langem als insektizide Wirkstoffe bekannt. Einige davon, darunter auch 3-Phenoxybenzylester der 2,2-Dimethyl-3-(2,2-dichlorvinyl)-cyclopropancarbon-säure, sind auch als Wirkstoffe gegen keratinfressende Schädlinge beschrieben worden. Siehe z. B. J. Text. Inst. 1976, No. 3, Vol. 67, 77; DE-A-2 9 23 217; US-A-4 219 593; EP-B 11 789; US-A-4 283 444; EP-A 105 030. Diese Pyrethroide wirken sehr gut gegen Mottenlarven, aber auch gegen Larven von Pelz- und Teppichkäfern. In den genannten Veröffentlichungen werden die Wirkstoffe als nicht näher definierte Isomerengemische eingesetzt, wie sie bei der üblichen Synthese erhalten werden.

Auf Grund der stereochemischen Verhältnisse kommen 3-Phenoxy-benzylester der 2,2-Dimethyl-3-(2,2-dichlorvinyl)-cyclopropancarbonsäure in 2 geometrischen Isomeren (cis, trans) und, je nach Substitution am α-C-Atom der Alkoholkomponente, in 4 oder 8 verschiedenen optischen Isomeren vor. In der DE-A-2 439 177 sowie in Pesticide Science, 1975 (6), 537-542 und 1974 (5), 791-799 sind verschiedene geometrische und optische Isomere und Isomerengemische beschrieben. Diese beiden Veröffentlichungen lehren auch, dass bestimmte optische Isomere, nämlich jene, die bezüglich des Cyclopropanringes R-Konfiguration aufweisen, besonders ausgeprägte insektizide Wirkung insbesondere gegenüber Hausfliegen und Senfkäfern aufweisen. Diesen Druckschriften ist weiter zu entnehmen, dass ein bestimmtes geometrisches Isomeres nicht durchgehend besser wirksam ist als das andere. Die Resultate zeigen im Gegenteil, dass in einigen Fällen das cis-, in anderen Fällen das trans-Isomere besser wirkt.

Aus der DE-A-2 547 534 sind ebenfalls einige geometrische und optische Isomere von bestimmten 2,2-Dimethyl-3-(2,2-dichlorvinyl)-cyclopropancarbonsäure-3-phenoxybenzylestern bekannt. Von diesen Isomeren wird die trans-Form bevorzugt (siehe Präparate 1, 6 bis 10, 13, 14 und 16).

Es wurde nun überraschenderweise gefunden, dass die cis-Isomeren (bzw. die cis-Enantiomerengemische) einer kleinen Gruppe von 2,2-Dimethyl-3-(2,2-dichlorvinyl)-cyclopropancarbonsäure-3-phenoxybenzylestern ganz besonders gut gegen keratinfressende Insekten wirken. Diese Isomeren weisen durchgehend wesentlich höhere Wirksamkeit gegen Keratinschädlinge auf als die entsprechenden trans-Isomeren bzw. als die üblicherweise verwendeten statistischen Isomerengemische. Die genannten cis-Isomeren eignen sich daher in ganz hervorragender Weise zum Schützen von Keratinmaterial, insbesondere Wolle, gegen den Befall durch keratinfressende Insekten.

Das erfindungsgemässe Verfahren zum Schützen bzw. Ausrüsten von Keratinmaterial bzw. keratinhaltigem Material vor bzw. gegen Befall durch keratinfressende Insekten ist dadurch gekennzeichnet, dass man das zu schützende Material mit (±)-cis-2,2-Dimethyl-3-(2,2-dichlorovinyl)-cyclopropancarbonsäure-3-phenoxybenzylestern der Formel

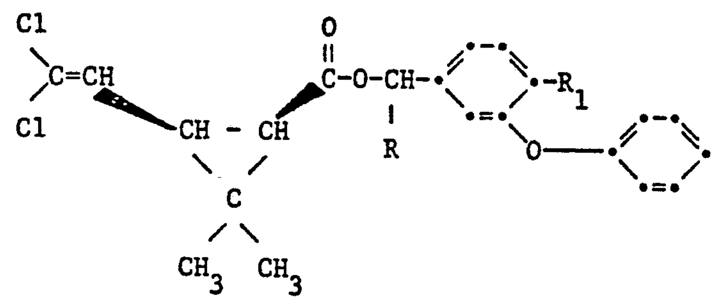

, (1)

worin R Wasserstoff, $-C\equiv CH$, $-C\equiv C-CH_3$ oder CN und $R_1$ Wasserstoff oder Fluor bedeuten, oder mit einer mindestens 90 % dieser cis-Isomeren enthaltenden Isomerenmischung behandelt.

Weiter betrifft die Erfindung das mit Hilfe von Verbindungen der Formel (1) geschützte bzw. ausgerüstete Material.

Im erfindungsgemässen Verfahren werden beispielsweise solche Verbindungen der Formel (1) eingesetzt, worin R Wasserstoff oder CN und $R_1$ Wasserstoff bedeuten.

Bevorzugte Verbindungen für den Einsatz im erfindungsgemässen Verfahren sind solche der Formel (1), worin R Wasserstoff oder CN und $R_1$ Fluor bedeuten, oder auch solche, worin R für $C\equiv C-CH_3$ und $R_1$ für Wasserstoff oder Fluor stehen.

Die im erfindungsgemässen Verfahren zum Schützen von Keratinmaterial gegen keratinfressende Insekten verwendbaren Verbindungen der Formel (1) wirken insbesondere z. B. gegen keratinfressende Larven von Lepidoptera, z. B. Tineola spec. und Tinea spec., aber auch gegen keratinfressende Larven von Coleoptera, z. B. Anthrenus spec. und Attagenus spec. Sie eignen sich vorzüglich zum Schützen von Keratinmaterial bzw. keratinhaltigem Material gegen Insektenfrass, insbesondere zur wasch- und lichtechten Ausrüstung gegen

Insekten, vor allem zur Motten- und Käferechtausrüstung von derartigen Materialien. Es kann Keratinmaterial bzw. keratinhaltiges Material sowohl in rohem als auch in verarbeitetem Zustand ausgerüstet werden, z. B. rohe oder verarbeitete Schafwolle, Produkte aus anderen Tierhaaren, Teile, Pelze und Federn.

Praktisch besonders wichtig ist die Wirksamkeit der Verbindungen der Formel (1) gegen die Larven der Kleidermotte (Tineola bisselliella), der Pelzmotte (Tinea pellionella) und der Samenmotte (Hofmannophila pseudospretella), aber auch gegen die Larven der Pelz- und Teppichkäfer (Attagenus spec. bzw. Anthrenus spec.), z. B. des Wollkraut-Blütenkäfers (Anthrenus verbasci), des Bibernell-Blütenkäfers (Anthrenus pimpinellae), des Gemeinen Teppichkäfers (Anthrenus scrophulariae), des Bebänderten Teppichkäfers (Anthrenus fasciatus), des Gefleckten Pelzkäfers (Attagenus pellio) und vor allem des Dunklen Pelzkäfers (Attagenus piceus) und des Teppichkäfers (Anthrenus flavipes).

Bevorzugt wird das erfindungsgemässe Verfahren einerseits zum Schützen von Textilien aus Wolle, z. B. von Wolldecken, Wollteppichen, Wollwäsche, Wollkleidern und Wirkwaren bzw. wollhaltigen Textilien, wie Mischgeweben, deren eine Komponente Wolle ist, z. B. Mischgeweben aus Wolle und anderen Naturfasern, vorzugsweise Baumwolle oder aus Wolle und Kunstfasern, andererseits auch zum Schützen von Pelzen und Fellen vor dem Befall durch die erwähnten Schädlinge eingesetzt.

Die Verbindungen der Formel (1) werden auf die oben erwähnten Substrate, insbesondere auf wollene und wollhaltige Textilien, vorzugsweise mit Hilfe der aus der Färbereipraxis bekannten Methoden wie Ausziehfärbeverfahren und Foulardapplikation aufgebracht. Zu diesem Zweck wird eine wässrige Lösung oder Dispersion (bzw. Emulsion oder Suspension) des jeweiligen Wirkstoffes angefertigt. Der Wirkstoff kann vorher in organischen Lösungsmitteln wie aliphatischen und alicyclischen Alkoholen, Ketonen, Kohlenwasserstoffen wie Benzol, Xylolen, Toluol, Benzinen, ferner chlorierten und fluorierten Kohlenwasserstoffen, insbesondere in Propylenglykol, Methoxyäthanol, Äthoxyäthanol oder Dimethylformamid gelöst und anschliessend dem Applikationsbad zugegeben werden, das zusätzliche in der Färbereipraxis übliche Hilfsstoffe, z. B. Dispergatoren, Netzmittel, Säuren, Basen und/oder Farbstoffe enthalten kann, wobei derartige Hilfsstoffe bereits in der organischen Stammformulierung enthalten sein können.

Die Textilmaterialien können z. B. durch heisse oder kalte wässrige Färbe-, Bleich-, Chromierungs- oder Nachbehandlungsbäder mit den Wirkstoffen imprägniert werden, wobei verschiedene Textilausrüstungsverfahren, wie z. B. das Foulard- oder Ausziehverfahren, in Frage kommen.

Die Behandlung erfolgt zweckmässig bei Temperaturen von 10 bis 100°C, im Färbebad vorzugsweise bei etwa 60 - 100°C, im Nachbehandlungs- oder Waschbad bei vorzugsweise 10 bis 70, insbesondere 20 bis 60°C.

Als zusätzliche Hilfsmittel können den Applikationsflotten z. B. Dispergatoren, Emulgatoren oder Tenside zugegeben werden. Daneben kann die Flotte auch noch übliche Hilfsstoffe, wie wasserlösliche Perborate, Polyphosphate, Carbonate, Silikate, optische Aufheller, Weichmacher, sauer reagierende Salze, wie Ammonium- oder Zinksilikonfluorid, oder gewisse organische Säuren, wie Oxalsäure, Essigsäure oder besonders Ameisensäure, ferner Antimikrobika und Appreturmittel, z. B. solche auf Kunstharzbasis oder Stärke, enthalten. Falls die Motten- und Käferechtausrüstung gemeinsam mit dem Färben des Materials (z. B. Wolle) durchgeführt wird, enthalten die Flotten auch noch die entsprechenden Farbstoffe und gegebenenfalls die dazu erforderlichen Hilfsmittel, z. B. Egalisiermittel.

Wässrige Applikationsflotten können z. B. Tenside, beispielsweise anionaktive Verbindungen, wie Seifen und andere Carboxylate (z. B. Alkalisalze höherer Fettsäuren), Abkömmlinge von Schwefel-Sauerstoffsäuren (z. B. Natriumsalz der Dodecylbenzolsulfonsäure, wasserlösliche Salze von Schwefelsäuremonoestern höhermolekularer Alkohole oder ihrer Polyglykoläther, wie etwa lösliche Salze von Dodecylalkoholsulfat oder von Dodecylalkoholpolyglykoläther-sulfat), Abkömmlinge von Phosphor-Sauerstoffsäuren (z. B. Phosphate), Abkömmlinge mit saurem (elektrophilem) Stickstoff in der hydrophilen Gruppe (z. B. Disulfinsalze), kationaktive Tenside, wie Amine und ihre Salze (z. B. Lauryl-diäthylentriamin), Oniumverbindungen, Aminoxide oder nichtionogene Tenside, wie Polyhydroxyverbindungen, Tenside auf Mono- oder Polysaccharidbasis, höhermolekulare Acetylenglykole, Polyglykoläther (z. B. Polyglykoläther höherer Fettalkohole, Polyglykoläther höhermolekular-alkylierter Phenole) enthalten.

Im Falle von nicht-wässriger Applikation (Lösungsmittelapplikation) kann ein entsprechender Teil einer Verbindung der Formel (1) auch einem geeigneten Lösungsmittel zugegeben werden und mit der so erhaltenen Lösung kann das zu schützende Material imprägniert werden.

Als Lösungsmittel kommen hierfür unter anderen Trichloräthylen, Methylenchlorid, Kohlenwasserstoffe, Propylenglykol, Methoxyäthanol, Äthoxyäthanol, Dimethylformamid in Frage, denen noch Verteilungsmittel (z. B. Emulgatoren, wie sulfiertes Ricinusöl, Fettalkoholsulfate usw) und/oder andere Hilfsstoffe zugesetzt werden können. Die zu schützenden Materialien werden üblicherweise mit diesen Lösungen einfach imprägniert.

Die Ausrüstung der zu schützenden Materialien kann aber auch mit einem Trockenreinigungsprozess kombiniert werden. Ein entsprechender Teil einer Verbindung der Formel (1) wird zu diesem Zweck im Reinigungsmittel (etwa niedere halogenierte Alkane, z. B. Trichloräthylen usw.) gelöst und der Reinigungsprozess wie üblich durchgeführt.

Ein Anteil einer Verbindung der Formel (1) kann aber auch in leicht flüchtigen organischen Lösungsmitteln gelöst und die Lösung dann auf das zu schützende Substrat aufgesprüht werden (Sprühapplikation). Für diese Applikationsart eignen sich vor allem wollhaltige Textilien, Pelze und Federn. Der Vorteil der Sprühapplikation besteht darin, dass wegen der Rückgewinnung der Lösungsmittel eine Belastung der Abwässer vermieden wird.

Im erfindungsgemässen Verfahren können die Verbindungen der Formel (1) auch in Kombination mit

anderen gegen keratinfressende Insekten wirksamen Schutzmitteln angewendet werden, z. B. in Kombination mit Harnstoffderivaten, Benzimidazolen, aromatischen Sulfonamiden, Phosphor- und Phosphonsäureestern und 5-Phenylcarbamoylbarbitursäurederivaten.

Die jeweils eingesetzte Menge an Verbindung der Formel (1), die in das jeweilige Applikationsbad bzw. das nichtwässrige Lösungsmittel eingebracht wird, hängt vom jeweiligen Substrat und der Applikationsmethode ab. Diese Menge wird üblicherweise jedoch so bemessen, dass nach dem Aufziehen auf das jeweils zu schützende Material letzteres etwa 10 bis 2 000 ppm, vorzugsweise 100 bis 1 000 ppm an Verbindung der Formel (1) enthält, wobei die obere Grenze weitgehend durch Überlegungen ökonomischer Natur gegeben ist, während die untere Grenze von Kriterien wie angestrebte Breite und Dauerhaftigkeit der Schutzwirkung abhängt. Dies ergibt z. B. für das Ausziehverfahren bei einem Flottenverhältnis von 1 : 20 Konzentrationen von 0,001 bis 1 g Wirksubstanz/l Behandlungsbad, je nach erreichbarem Ausziehgrad. Beim Foulardverfahren sind Konzentrationen bis 2 g Wirksubstanz pro Liter möglich.

Wie aus obiger Verfahrensdefinition zu entnehmen, können im erfindungsgemässen Verfahren die reinen cis-Isomeren der Formel (1) oder Isomerengemische eingesetzt werden, die mindestens 90 % des cis-Isomeren enthalten. Alle Angaben in der vorstehenden detaillierten Verfahrensbeschreibung, die sich auf Verbindungen der Formel (1) beziehen, umfassen auch Isomerengemische, die mindestens 90 % der Verbindung der Formel (1) enthalten. Bevorzugt werden im erfindungsgemässen Verfahren solche Isomerengemische eingesetzt, die mindestens 95 % an cis-Verbindung der Formel (1) enthalten, besonders bevorzugt sind die praktisch reinen cis-Isomeren.

Aus Pesticide Science, 1975 (6), 537 - 542 und 1974 (5), 791 - 799 sind der (±)-cis-2,2-Dimethyl-3-(2,2-dichlorvinyl)-cyclopropan-carbonsäure-3-phenoxy-benzylester ("cis-Permethrin") und der (±)-cis-2,2-Dimethyl-(2,2-dichlorvinyl)-cyclopropancarbonsäure-3-phenoxy-α-cyano-benzylester ("cis-Cypermethrin") bereits bekannt.

Die cis-Isomeren der Formel (1) sowie die mindestens 90 % dieser Isomeren enthaltenden Isomerenmischungen können nach verschiedenen an sich bekannten Verfahren erhalten werden. Ein Verfahren besteht darin, dass man (±)-cis-2,2-Dimethyl-3-(2-2-dichlorvinyl)-cyclopropancarbonsäure oder ein funktionelles Derivat davon mit einer Verbindung der Formel

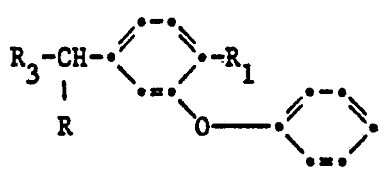

(2)

umsetzt, worin $R_3$ die Hydroxylgruppe oder ein Halogenatom bedeutet.

Als funktionelle Derivate der cis-2,2-Dimethyl-3-(2,2-dichlorvinyl)-cyclopropancarbonsäure kommen neben deren Salzen vorzugsweise Säurehalogenide (-COX) und Ester ($-COOR_4$) in Betracht.

X bedeutet dabei ein Halogenatom, insbesondere Chlor oder Brom.

$R_4$ steht vorzugsweise für Alkyl, vor allem für Äthyl oder Methyl. Bevorzugt wird das Verfahren folgendermassen ausgeführt:

a) Umsetzung der cis-2,2-Dimethyl-3-(2,2-dichlorvinyl)-cyclopropan-carbonsäure mit einer Verbindung der Formel (2), worin $R_3$ Halogen bedeutet, in Gegenwart eines säurebindenden Mittels.

b) Umsetzung eines Säurehalogenids (insbesondere -chlorids oder -bromids) der cis-2-2-Dimethyl-3-(2,2-dichlorvinyl)-cyclopropancarbonsäure mit einer Verbindung der Formel (2), worin $R_3$ Hydroxyl bedeutet, in Gegenwart eines säurebindenden Mittels.

c) Umsetzung der cis-2,2-Dimethyl-3-(2,2-dichlorvinyl)-cyclopropancarbonsäure mit einer Verbindung der Formel (2), worin $R_3$ Hydroxyl bedeutet, in Gegenwart eines wasserbindenden Mittels.

d) Umsetzung eines Alkylesters der cis-2,2-Dimethyl-3-(2,2-dichlorvinyl)-cyclopropancarbonsäure mit einer Verbindung der Formel (2), worin $R_3$ Hydroxyl bedeutet, unter Alkoholabspaltung.

Als säurebindendes Mittel für die Verfahren a und b kommen insbesondere tertiäre Amine, wie Trialkylamin und Pyridin, ferner Hydroxide, Oxide, Carbonate und Bicarbonate von Alkali- und Erdalkalimetallen sowie Alkalimetallalkoholate, wie z. B. Kaliumt.butylat und Natriummethylat, in Betracht. Als wasserbindendes Mittel für das Verfahren c kann z. B. Dicyclohexylcarbodiimid verwendet werden. Die Verfahren a bis d werden z. B. bei einer Reaktionstemperatur zwischen -10 und 120°C, meist zwischen 20 und 80°C bei normalem oder erhöhtem Druck und vorzugsweise in einem inerten Lösungs- oder Verdünnungsmittel durchgeführt. Als Lösungs- oder Verdünnungsmittel eignen sich z. B. Äther und ätherartige Verbindungen, wie Diäthyläther, Dipropyläther, Dioxan, Dimethoxyäthan und Tetrahydrofuran; Amide, wie N,N-dialkylierte Carbonsäureamide; aliphatische, aromatische sowie halogenierte Kohlenwasserstoffe, insbesondere Benzol, Toluol, Xylole, Chloroform und Chlorbenzol; Nitrile wie Acetonitril; Dimethylsulfoxid und Ketone wie Aceton und Methyläthylketon.

Die als Ausgangsverbindung eingesetzte (±)-cis-2,2-Dimethyl-3-(2,2-dichlorvinyl)-cyclopropancarbonsäure

und deren Derivate sind bekannt. Siehe Pesticide Science 1974 (5), 791 - 799.

Die Verbindungen der Formel (1) können auch nach den in der US-A-4 242 278 und der GB-A-1 598 472 beschriebenen Verfahren erhalten werden.

Eine weitere Möglichkeit, die cis-Isomeren der Formel (1) zu erhalten, besteht darin, eine cis, trans-Isomerenmischung, wie sie bei der nicht stereospezifischen Synthese von 2,2-Dimethyl-3-(2,2-dichlorvinyl)-cyclopropancarbonsäure-3-phenoxybenzylestern anfällt, durch an sich bekannte Methoden in die beiden geometrischen Isomeren aufzutrennen. Diese Trennung kann beispielsweise durch fraktionierte Kristallisation in geeigneten Lösungsmitteln (beispielsweise in aliphatischen oder aromatischen Kohlenwasserstoffen, wie etwa Hexan, Toluol usw.) oder vorzugsweise durch Säulenchromatographie unter Verwendung von geeigneten Eluiermitteln (z. B. der vorstehend genannten Lösungsmittel) erfolgen. Bei diesen Methoden kann man beispielsweise, um den Verlust an cis-Isomeren möglichst gering zu halten, die Trennung nur bis zum Erhalt eines Isomerengemisches ausführen, das noch bis zu 10 % des trans-Isomeren enthält, welches Isomerengemisch ebenfalls im erfindungsgemässen Verfahren einsetzbar ist.

Die cis-trans-Isomerengemische, die die beiden Isomeren in annähernd gleichen Mengen (z. B. cis : trans 40 : 60) enthalten und deren Herstellung sind aus der Literatur bekannt. Siehe z. B. DE-A-2 326 077, DE-A-2 709 264, EP-A-8 331.

Die nachfolgenden Beispiele erläutern das erfindungsgemässe Verfahren sowie die Herstellung der darin verwendeten Wirkstoffe der Formel (1) näher. Es wird jedoch betont, dass die Erfindung nicht auf diese Beispiele beschränkt ist.

In den nachfolgenden Beispielen, ebenso wie in der gesamten übrigen Beschreibung und in den Patentansprüchen, bedeuten Teile- und Prozentangaben Gewichtsteile und Gewichtsprozent, sofern nichts anderes angegeben ist.

**Beispiel 1:**

Zu 5 g (±)-cis-2,2-Dimethyl-3-(2,2-dichlorvinyl)-cyclopropancarbonsäurechlorid, gelöst in 20 ml Toluol, werden unter Eiskühlung und Luftausschluss ($N_2$-Spülung) 2,3 g Pyridin und anschliessend 5,2 g 3-Phenoxy-α-propin-1-yl-benzylalkohol, gelöst in 10 ml Toluol, zugetropft. Anschliessend wird eine Spatelspitze 4-Dimethylaminopyridin zugegeben. Die Reaktionsmischung wird über Nacht gerührt und dann mit je etwa 200 ml Toluol und Wasser verdünnt, nacheinander mit 2 n HCl, 10-%-iger $K_2CO_3$-, 10-%-iger $NaHCO_3$- und gesättigter Kochsalzlösung extrahiert, über $MgSO_4$ getrocknet und am Rotationsverdampfer eingeengt. Die eingeengte Lösung wird in einem 300 g Einlaufbecher über 200 g Kieselgel filtriert und mit Hexan-Äther 95 : 5 eluiert. Nach Entfernung des Lösungsmittels erhält man 8,6 g (±)-cis-2,2-Dimethyl-3-(2,2-dichlorvinyl)-cyclopropancarbonsäure-3-phenoxy-α-propin-1-yl-benzylester der Formel

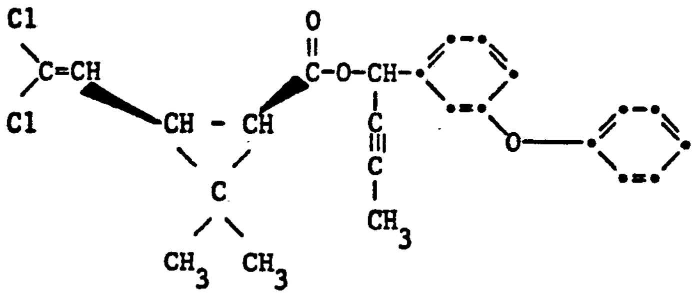

(101)

in Form eines hellgelben Öls mit einem Brechungsindex $n_D^{20}$ = 1,5712.

Unter Verwendung des (±)-trans-2,2-Dimethyl-3-(2,2-dichlorvinyl)-cyclopropancarbonsäurechlorids als Ausgangsmaterial wird in analoger Weise zu Vergleichszwecken der isomere (±)-trans-2,2-Dimethyl-3-(2,2-dichlorvinyl) cyclopropancarbonsäure-3-phenoxy-α-propin-1-yl-benzylester (Verbindung 102) als gelbes Öl mit einem Brechungsindex $n_D^{20}$ = 1,5687 erhalten.

Das aus der EP-A-8 332 bekannte cis/trans-Isomerengemisch des 2,2-Dimethyl-3-(2,2-dichlorviny-)-cyclopropancarbonsäure-3-phenoxy-α-propin-1-yl-benzylesters (Verbindung 103) weist einen Brechungsindex von $n_D^{20}$ = 1,5700 auf.

**Beispiel 2:**

Unter Verwendung von 3-Phenoxybenzylalkohol bzw. 3-Phenoxy-α-cyano-benzylalkohol und (±)-cis-2,2-Dimethyl-3-(2,2-dichlorvinyl)-cyclopropancarbonsäurechlorid als Ausgangsmaterialien werden analog Beispiel

1 die folgenden Verbindungen erhalten:

(±)-cis-2,2-Dimethyl-3-(2,2-dichlorvinyl)-cyclopropancarbonsäure-3-phenoxybenzylester (Verbindung 201) mit einem Brechungsindex 20 $n_D^{20}$ = 1,5680.

(±)-cis-2,2-Dimethyl-3-(2,2-dichlorvinyl)-cyclopropancarbonsäure-3-phenoxy-α-cyano-benzylester (Verbindung 202) mit einem Brechungsindex $n_D^{20}$ = 1,5610.

Unter Verwendung des (±)-trans-2,2-Dimethyl-3-(2,2-dichlorvinyl)-cyclopropancarbonsäurechlorids werden in analoger Weise zu Vergleichszwecken die beiden isomeren trans-Verbindungen erhalten:

(±)-trans-2,2-Dimethyl-3-(2,2-dichlorvinyl)-cyclopropancarbonsäure-3-phenoxybenzylester (Verbindung 203) mit einem Brechungsindex $n_D^{20}$ = 1,5642.

(±)-trans-2,2-Dimethyl-3-(2,2-dichlorvinyl)cyclopropancarbonsäure-3-phenoxy-α-cyano-benzylester (Verbindung 204) mit einem Brechungsindex $n_D^{20}$ = 1,5623.

Weiter werden zu Vergleichszwecken die entsprechenden aus der DE-A-2 326 077 bekannten cis-trans-Isomerenmischungen herangezogen:

(±)-cis, trans-2,2-Dimethyl-3-(2,2-dichlorvinyl)-cyclopropancarbonsäure-3-phenoxybenzylester (Verbindung 205), bekannt unter dem Namen "Permethrin". Verhältnis cis/trans ca. 40 : 60.

(±)-cis, trans-2,2-Dimethyl-3-(2,2-dichlorvinyl)-cyclopropancarbonsäure-3-phenoxy-α-cyano-benzylester (Verbindung 206), bekannt unter dem Namen "Cypermethrin". Verhältnis cis/trans ca. 40 : 60.

Das in den Beispielen 1 und 2 als Ausgangsprodukt benötigte (±)-cis-2,2-Dimethyl-3-(2,2-dichlorvinyl)-cyclopropancarbonsäurechlorid kann folgendermassen erhalten werden:

a) Die Herstellung der (±)-cis- sowie der (±)-trans-2,2-Dimethyl-3-(2,2-dichlorvinyl)-cyclopropancarbonsäure ist in Pesticide Science 1974 (5), 791 - 799, Punkte 2.1 bis 2.3 beschrieben.

b) 8 g (±)-cis-2,2-Dimethyl-3-(2,2-dichlorvinyl)-cyclopropancarbonsäure werden in 80 ml Hexan auf Rückflusstemperatur erhitzt. Nach Zugabe eines Tropfens Dimethylformamid werden 6 g Oxalsäurechlorid, gelöst in 10 ml Hexan, während 1 Stunde langsam zugetropft. Nach weiteren 3 1/2 Stunden Rückflusskochen ist keine Gasentwicklung mehr festzustellen. Das Lösungsmittel wird auf dem Rotationsverdampfer entfernt und der Rückstand im Kugelrohr bei 80°C und 0,1 Torr destilliert. Das erhaltene (±)-cis-2,2-Dimethyl-3-(2,2-dichlorvinyl)-cyclopropancarbonsäurechlorid kann direkt für die Umsetzung gemäss Beispiel 1 bzw. 2 eingesetzt werden.

In analoger Weise wird das entsprechende trans-Säurechlorid hergestellt.

**Beispiel 3:**

11 g der Isomerenmischung (±)-cis, trans-2,2-Dimethyl-3-(2,2-dichlorvinyl)-cyclopropancarbonsäure-3-phenoxy-4-fluor-α-cyanobenzylester (gelbes Öl, cis/trans-Verhältnis ca. 40 : 60, $n_D^{23}$ = 1,5548), erhältlich gemäss Beispiel 2 der DE-A-2 709 264 werden in Toluol/Hexan 1 : 1 als Laufmittel an einer Kieselgelsäule chromatographiert [Füllgewicht des Kieselgels 331 246 µm = 40/60 Mesh) 1200 g; Säulendurchmesser 9 cm]. Es werden 3 Fraktionen eluiert, wobei die erste das cis-, die dritte das trans-Isomere und die zweite eine cis, trans-Isomerenmischung enthält. Nach Entfernung des Lösungsmittels erhält man aus den Fraktionen 1 und 3

3,8 g (±)-cis-2,2-Dimethyl-3-(2,2-dichlorvinyl)-cyclopropancarbonsäure-3-phenoxy-4-fluor-α-cyanobenzylester der Formel

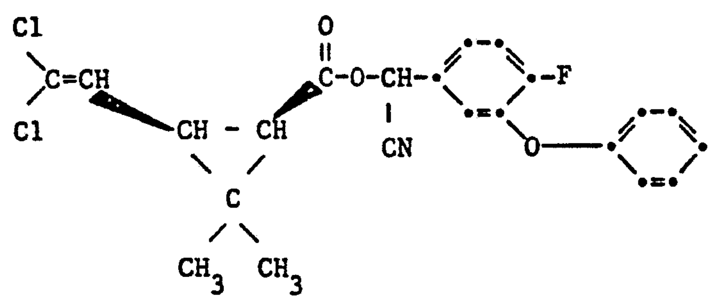

(301)

als gelbes Öl mit einem Brechungsindex $n_D^{20}$ = 1,5567 und einem in Fig. 1 dargestellten NMR-Spektrum, sowie

4,7 g (±)-trans-2,2-Dimethyl-3(2,2-dichlorvinyl)-cyclopropancarbonsäure-3-phenoxy-4-fluor-α-cyanobenzylester (Verbindung 302) als gelbliches Wachs, dessen NMR-Spektrum in Fig. 2 dargestellt ist.

**Beispiel 4:** Applikation im Ausziehbad

Von den zu prüfenden Verbindungen Nr. 101, 102, 201, 203, 205, 301 und 302 werden Stammlösungen durch Auflösung von jeweils 50 mg der Wirksubstanz in 25 ml Äthylenglykolmonoäthyläther bereitet.

3 g schwere, gut vorgenetzte Wollgewebstücke werden in eine 30° C warme wässrige Flotte eingebracht, die folgende Bestandteile enthält:

x ppm, bezogen auf das Wollgewicht, der jeweils zu prüfenden Verbindung (eine entsprechende Menge der oben beschriebenen Stammlösung wird der Flotte zugegeben).
1 %, bezogen auf das Wollgewicht, 80 %-ige Essigsäure.
4 %, bezogen auf das Wollgewicht, Ammoniumsulfat.
0,5 g/l Flotte eines Netz- und Dispergiermittels.

Die Temperatur der Flotte wird innerhalb 20 Minuten auf 98° C gesteigert und 60 Minuten bei dieser Temperatur belassen. Nach dem Abkühlen Werden die Muster einzeln mit Wasser gespült und bei Raumtemperatur getrocknet.

Die mit den zu prüfenden Verbindungen ausgerüsteten trockenen Wollmuster werden der Mottenechtheitsprüfung (Fraßschutz gegen die Kleidermotte Tineola bisselliella Hum.) sowie der Echtheitsprüfung gegen Larven des Pelzkäfers (Attagenus piceus Oliv.) und Teppichkäfers (Anthrenus flavipes var. seminiveus) gemäss der Vorschrift des Schweizer Normenverbandes SNV 195901 unterworfen.

Es werden jeweils Larven von Tineola und Larven von Anthrenus und 6 bis 7 Wochen alte Larven von Attagenus zur Prüfung verwendet.

Aus dem behandelten Wollflanellmuster werden Stücke gleicher Grösse ausgeschnitten und 14 Tage lang bei konstanter Temperatur (28° C) und konstanter relativer Luftfeuchtigkeit (65 %) dem Angriff (Frass) von je 15 Larven des entsprechenden Schädlings ausgesetzt. Die Beurteilung für alle 3 Schädlinge erfolgt nach dem Gewichtsverlust des Wollmusters.

Aus der nachfolgenden Tabelle 1 ist für die geprüften Verbindungen die jeweilige Einsatzkonzentration (in ppm, bezogen auf das Wollgewicht) und der durch den Schädlingsfrass verursachte Gewichtsverlust (in mg) zu entnehmen:

**Tabelle 1**

| | Tineola | | Attagenus | | Anthrenus | |
|---|---|---|---|---|---|---|
| Verbindung Nr. | Einsatzkonzentration (ppm) | Gewichtsverlust (mg) | Einsatzkonzentration (ppm) | Gewichtsverlust (mg) | Einsatzkonzentration (ppm) | Gewichtsverlust (mg) |
| 101 (cis) | 30 | 1,2 | 30 | 9,0 | 300 | 9,2 |
| 102 (trans) | 30 | 2,6 | 30 | 43,4 | 300 | 51,7 |
| 201 (cis) | 7,5 | 1,2 | 30 | 4,3 | 125 | 18,9 |
| 203 (trans) | 7,5 | 26,9 | 30 | 54,2 | 125 | 68,3 |
| 205 (cis/trans) | 7,5 | 5,8 | 30 | 14,9 | 125 | 29,2 |
| 301 (cis) | 7,5 | 0 | 7,5 | 11,4 | 125 | 14,9 |
| 302 (trans) | 7,5 | 0,4 | 7,5 | 51,4 | 125 | 48,0 |

Die Resultate zeigen, dass das jeweilige cis-Isomere eine um ein vielfaches bessere Wirkung als das trans-Isomere, aber auch als die geprüfte Isomerenmischung, aufweist.

**Beispiel 5:** Foulardapplikation

12,5 ml der jeweiligen, die zu prüfenden Verbindungen Nr. 101, 102, 201, 203, 205, 301 und 302 enthaltenden Stammlösung gemäss Beispiel 4 werden mit Äthylenglykolmonoäthyläther, der 1 g/l eines Netz- und Dispergiermittels enthält, verdünnt. Die Verdünnung erfolgt in der Weise, dass in der erhaltenen Foulardflotte die Konzentration der jeweils zu prüfenden Verbindung so eingestellt ist, dass auf dem Wollgewebe nach dem foulardieren x ppm des jeweiligen Wirkstoffes vorhanden sind (siehe Tabelle 2). Jeweils 3 ml der erhaltenen Lösung werden in eine Kristallisierschale gegeben. Darin wird eine geköderte Rondelle aus Wollgewebe mit Hilfe einer Pinzette ca. 3 Sekunden lang benetzt. Die feuchten Rondellen werden dann zwischen 2 Aluminiumfolien foulardiert, und zwar derart, dass die abgequetschten Rondellen je 100 %, bezogen auf ihr Gewicht, an Flotte aufgenommen haben. Die feuchten Rondellen werden an der Luft getrocknet und den

gleichen biologischen Prüfungen unterworfen, die in Beispiel 4 beschrieben sind. Die Ergebnisse sind in der nachfolgenden Tabelle 2 zusammengefasst:

**Tabelle 2**

| Verbindung Nr. | Tineola Einsatzkonzentration (ppm) | Tineola Gewichtsverlust (mg) | Attagenus Einsatzkonzentration (ppm) | Attagenus Gewichtsverlust (mg) | Anthrenus Einsatzkonzentration (ppm) | Anthrenus Gewichtsverlust (mg) |
|---|---|---|---|---|---|---|
| 101 (cis) | 30 | 1,0 | 30 | 2,0 | 250 | 1,1 |
| 102 (trans) | 30 | 4,4 | 30 | 15,3 | 250 | 27,1 |
| 201 (cis) | 7,5 | 1,9 | 15 | 3,7 | 125 | 1,2 |
| 203 (trans) | 7,5 | 17,4 | 15 | 39,3 | 125 | 28,1 |
| 205 (cis/trans) | 7,5 | 5,5 | 15 | 32,5 | 125 | 11,0 |
| 301 (cis) | -- | -- | 7,5 | 0,8 | 125 | 0,1 |
| 302 (trans) | -- | -- | 7,5 | 9,3 | 125 | 16,3 |

Die Resultate zeigen, dass das jeweilige cis-Isomere eine um ein vielfaches bessere Wirkung als das trans-Isomere, aber auch als die geprüfte Isomerenmischung, aufweist.

**Beispiel 6:**

Es wird jeweils eine 10 %-ige Lösung der Verbindungen Nr. 101, 201, 202 und 301 in Äthylenglykolmonomethyläther hergestellt. Ein Volumenteil dieser Lösung wird mit 200 Volumenteilen eines zur Trockenreinigung geeigneten Lösungsmittels, z. B. einer passenden Benzinfraktion oder Perchloräthylen, verdünnt. Gewünschtenfalls können noch reinigungsfördernde Zusätze beigefügt werden. Wollartikel werden nun wie üblich in diesen Reinigungsflüssigkeiten behandelt und anschliessend auf einen Lösungsmittelgehalt von ca. 100 % des Wollgewichtes abgeschleudert. Sie sind nach dem Trocknen hervorragend gegen die in Beispiel 4 genannten keratinfressenden Schädlinge geschützt.

**Beispiel 7:**

Es wird jeweils eine 0,5 %-ige Lösung der Verbindungen Nr. 101, 201, 202 und 301 in Methylenchlorid, Trichloräthylen oder einer tiefsiedenden Benzinfraktion angesetzt. Wollartikel werden mit Hilfe einer üblichen Sprüheinrichtung mit diesen Lösungen besprüht, so dass 2 x 15 g/$m^2$ an Wirkstofflösung appliziert werden. Bei einem Ausnützungseffekt des Aerosols von 30 % befinden sich dann etwa 400 ppm der jeweiligen Wirkstoffverbindung auf dem Material. Die so ausgerüsteten Wollgewebe sind gegen die in Beispiel 4 genannten keratinfressenden Schädlinge geschützt.

**Patentansprüche**

1. Verfahren zum Schützen bzw. Ausrüsten von Keratinmaterial bzw. keratinhaltigem Material vor bzw. gegen Befall durch keratinfressende Insekten, dadurch gekennzeichnet, dass man das zu schützende Material mit (±)-cis-2,2-Dimethyl-3-(2,2-dichlorvinyl)-cyclopropancarbonsäure-3-phenoxybenzylestern der Formel

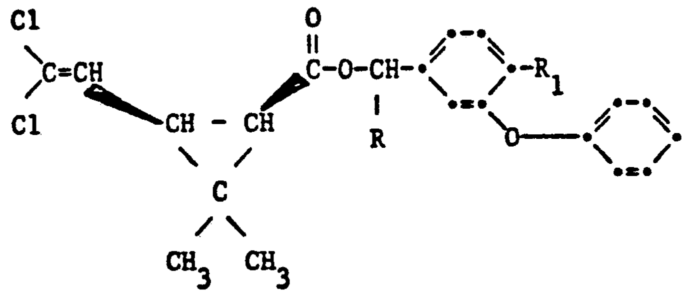

(1)

worin R Wasserstoff, -C≡CH, -C≡C-$CH_3$ oder CN und $R_1$ Wasserstoff oder Fluor bedeuten, oder mit einer mindestens 90 % dieser cis-Isomeren enthaltenden Isomerenmischung behandelt.

2. Verfahren nach Anspruch 1, dadurch gekennzeichnet, dass man eine Verbindung der Formel (1) einsetzt, worin R Wasserstoff oder CN und $R_1$ Wasserstoff bedeuten.

3. Verfahren nach Anspruch 1, dadurch gekennzeichnet, dass man eine Verbindung der Formel (1) einsetzt, worin R -C≡C-$CH_3$ und $R_1$ Wasserstoff oder Fluor bedeuten.

4. Verfahren nach Anspruch 1, dadurch gekennzeichnet, dass man eine Verbindung der Formel (1) einsetzt, worin R Wasserstoff oder CN und $R_1$ Fluor bedeuten.

5. Verfahren nach Anspruch 1, dadurch gekennzeichnet, dass man das zu schützende Material mit einer wässrigen Flotte, die eine oder mehrere der in Anspruch 1 definierten Verbindungen enthält, nach dem Ausziehverfahren oder dem Foulardverfahren behandelt, wobei die wässrige Flotte noch übliche Textilhilfsmittel, wie Dispergatoren, Netzmittel, Säuren, Basen und/oder Farbstoffe, enthalten kann.

6. Verfahren nach Anspruch 1, dadurch gekennzeichnet, dass man das zu schützende Material mit einer organischen Reinigungsflüssigkeit behandelt, die eine oder mehrere der in Anspruch 1 definierten Verbindungen enthält.

7. Verfahren nach Anspruch 1, dadurch gekennzeichnet, dass man das zu schützende Material mit einem organischen Lösungsmittel besprüht, das eine oder mehrere der in Anspruch 1 definierten Verbindungen enthält.

8. Verfahren nach Anspruch 1, dadurch gekennzeichnet, dass man auf die zu schützenden Materialien die Verbindungen der Formel (1) in einer Menge von 10 bis 2'000 ppm, bezogen auf das zu schützende Material, aufbringt.

9. Verfahren nach Anspruch 5, dadurch gekennzeichnet, dass man Wolltextilien im Färbebad nach dem Ausziehverfahren behandelt.

10. Verfahren nach Anspruch 5, dadurch gekennzeichnet, dass man Wolltextilien im Nachbehandlungsbad nach dem Ausziehver fahren behandelt.

11. Das nach Anspruch 1 ausgerüstete Keratinmaterial bzw. keratinhaltige Material.

12. Material nach Anspruch 11, enthaltend 10 bis 2'000 ppm Verbindungen der Formel (1).

**Claims**

1. A process for protecting or finishing keratinous material or keratin- containing material against attack by insects that feed on keratin, which process comprises treating the material to be protected with a 3-phenoxybenzyl (±)-cis-2,2-dimethyl-3-(2,2-dichlorovinyl)cyclopropane-carboxylate of the formula

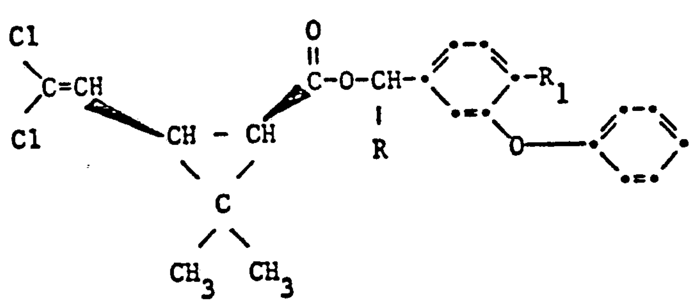

(1)

wherein R is hydrogen, -C≡CH, -C≡$CH_3$ or CN, and $R_1$ is hydrogen or fluorine, or with a mixture of isomers containing at least 90 % of these cis-isomers.

2. A process according to claim 1, which comprises the use of a compound of the formula (1), wherein R is hydrogen or CN, and $R_1$ is hydrogen.

3. A process according to claim 1, which comprises the use of a compound of the formula (1), wherein R is $-C\equiv CH_3$, and $R_1$ is hydrogen or fluorine.

4. A process according to claim 1, which comprises the use of a compound of the formula (1), wherein R is hydrogen or CN, and $R_1$ is fluorine.

5. A process according to claim 1, which comprises treating the material to be protected, by the exhaust or pad process, with an aqueous liquor containing one or more of the compounds as defined in claim 1, where the aqueous liquor may also contain conventional textile assistants such as dispersants, wetting agents, acids, bases and/or dyes.

6. A process according to claim 1, which comprises treating the material to be protected with an organic cleaning liquid containing one or more of the compounds defined in claim 1.

7. A process according to claim 1, which comprises spraying the material to be protected with an organic solvent containing one or more of the compounds defined in claim 1.

8. A process according to claim 1, which comprises applying to the material to be protected the compounds of the formula (1) in an amount of 10 to 2,000 ppm, based on the material to be protected.

9. A process according to claim 5, which comprises treating woollen textiles in a dye bath by the exhaust process.

10. A process according to claim 5, which comprises treating woollen textiles in an aftertreatment bath by the exhaust process.

11. The keratinous material or keratin-containing material finished according to claim 1.

12. Material according to claim 11 which contains 10 to 2,000 ppm of compounds of the formula (1).

**Revendications**

1. Procédé pour la protection et l'apprêtage de matière kératinique ou de matière contenant de la kératine avant ou contre l'infection par des insectes dévorant la kératine, caractérisé par le fait que l'on traite la matière à protéger avec des (±)-cis-2,2-diméthyl-3-(2,2-dichlorovinyl)-cyclopropanecarboxylates de 3-phénoxybenzyle de formule:

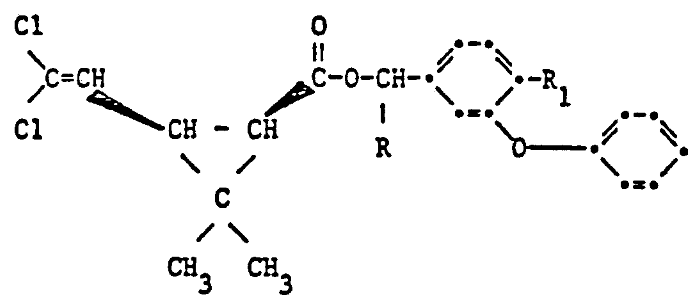

(1)

dans laquelle R représente un hydrogène, $-C\equiv CH$, $-C\equiv C-CH_3$, ou CN, et $R_1$ représente un hydrogène ou un fluor, ou biso avec un mélange d'isomères contenant au moins 90 % de ces isomères-cis.

2. Procédé selon la revendication 1, caractérisé par le fait que l'on utilise un composé de formule (1), où R représente un hydrogène ou CN et $R_1$ représente un hydrogène.

3. Procédé selon la revendication 1, caractérisé par le fait que l'on utilise un composé de formule (1), où R représente $-C\equiv C-CH_3$ et $R_1$ représente un hydrogène ou un fluor.

4. Procédé selon la revendication 1, caractérisé par le fait que l'on utilise un composé de formule (1), où R représente un hydrogène ou CN et $R_1$ représente un fluor.

5. Procédé selon la revendication 1, caractérisé par le fait que l'on traite la matière à protéger avec un bain aqueux qui contient un ou plusieurs des composés définis dans la revendication 1, selon le procédé par épuisement ou le procédé par foulardage, le bain aqueux pouvant encore contenir d'autres adjuvants pour textiles, comme des dispersants, des agents de mouillage, des acides, des bases et/ou des colorants.

6. Procédé selon la revendication 1, caractérisé par le fait que l'on traite la matière à protéger avec un liquide organique de nettoyage qui contient un ou plusieurs des composés définis dans la revendication 1.

7. Procédé selon la revendication 1, caractérisé par le fait que l'on pulvérise sur la matière à protéger un solvant organique qui contient un ou plusieurs des composés définis dans la revendication 1.

8. Procédé selon la revendication 1, caractérisé par le fait que l'on introduit sur la matière à protéger les composés de formule (1) en une quantité comprise entre 10 et 2.000 ppm, par rapport à la matière à protéger.

9. Procédé selon la revendication 5, caractérisé par le fait que l'on traite les textiles en laine dans le bain de teinture selon le procédé par épuisement.

10. Procédé selon la revendication 5, caractérisé par le fait que l'on traite les textiles en laine dans le bain de post-traitement selon le procédé par épuisement.

11. La matière kératinique ou contenant de la kératine apprêtée selon la revendication 1.

12. Matière selon la revendication 11, contenant entre 10 et 2.000 ppm des composés de formule (1).

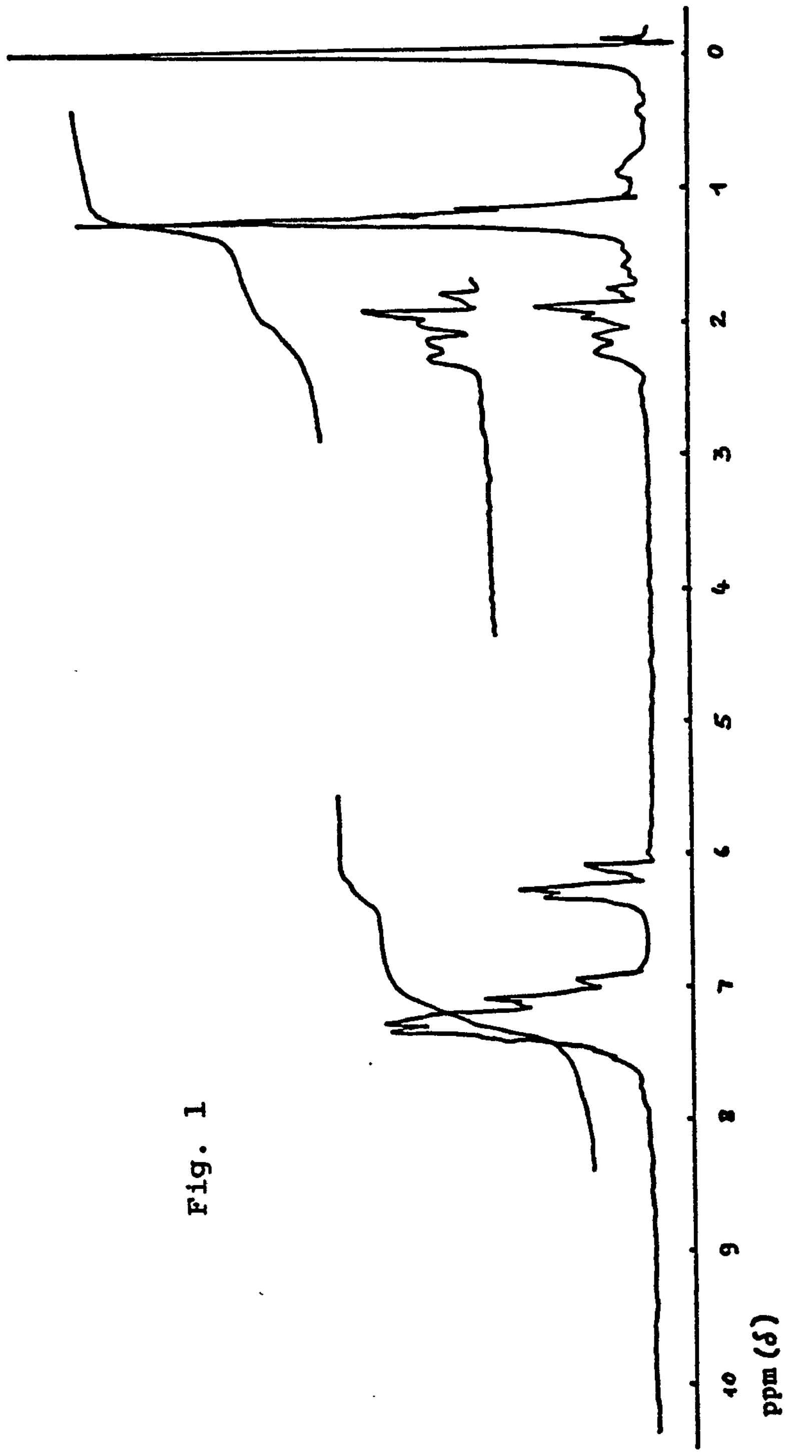


Fig. 1

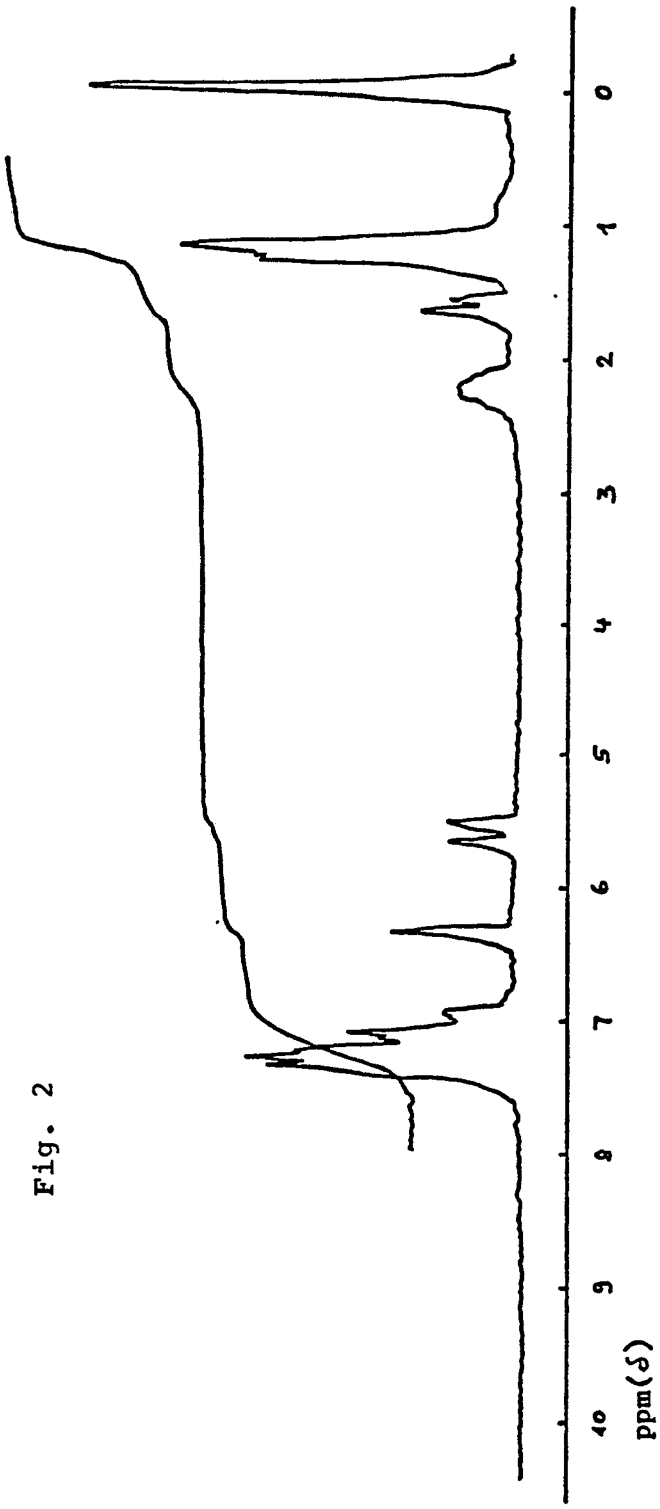


Fig. 2